# FASCICULE DE BREVET EUROPEEN

(11) **EP 2 162 663 B1**
(45) Date de publication et mention de la délivrance du brevet: **29.02.2012**
(21) Numéro de dépôt: 08826689.5
(22) Date de dépôt: 26.06.2008
(51) Int. Cl.: F16L 19/08, F16L 37/08, F16L 21/00

(54) **RACCORD A LAVAGE EXTERIEUR FACILITE**
STECKVERBINDER MIT VERBESSERTER AUSSENREINIGUNG
CONNECTOR WITH IMPROVED OUTER WASHING

(30) Priorité: 29.06.2007 FR 0704688
(43) Date de publication de la demande: 17.03.2010
(73) Titulaire: Legris SAS, 35000 Rennes (FR)
(72) Inventeur: LE QUERE, Philippe, F-35830 Betton (FR)
(74) Mandataire: Lavialle, Bruno François Stéphane
(86) Numéro de dépôt international: PCT/FR2008/000904
(87) Numéro de publication internationale: WO 2009/016287

(56) Documents cités:
- EP-A- 1 085 245
- WO-A-94/15131
- GB-A- 2 072 780
- GB-A- 2 103 744
- US-A- 3 799 584
- US-A- 5 090 738

## Description

L'invention concerne un raccord pour la connexion l'un à l'autre de deux éléments d'un circuit de transport de fluide. Ces éléments peuvent être deux conduites, une pompe, un distributeur, une buse, un réservoir, un actionneur...

### ARRIERE PLAN DE L'INVENTION

Dans certains industries, notamment alimentaires, l'intérieur des circuits destinés au transport des produits alimentaires est régulièrement nettoyé pour empêcher le développement de bactéries et autres organismes qui pourraient altérer la qualité des produits alimentaires circulant dans le circuit et ainsi entraîner une dégradation des qualités organoleptiques desdits produits, ou pire un risque de contamination et de maladie pour les consommateurs. Des contraintes similaires se retrouvent également dans d'autres secteurs d'activité comme l'industrie pharmaceutique.

Dans ces types d'applications, il est également courant de procéder à des nettoyages externes des raccords. Toutefois, ceux-ci présentent des recoins et autres renfoncements qui constituent des zones de rétention privilégiées d'impuretés, solides ou liquides telles que des matières, particules, salissures et organismes, et qui sont peu accessibles au liquide de nettoyage. Ces organismes peuvent se développer et, si les éléments d'étanchéité du raccord présentent un défaut, ces organismes de même que les autres sortes d'impuretés peuvent rapidement contaminer le produit circulant dans le circuit. En outre, lors d'une déconnexion d'une conduite d'un raccord, par exemple pour une opération de maintenance, il existe un risque que les impuretés retenues dans les renfoncements du raccord ne viennent contaminer l'intérieur de celui-ci et, par la suite, le produit y circulant. Le document GB-A-2 072 780 décrit un raccord ayant les caractéristiques du préambule de la revendication 1.

### OBJET DE L'INVENTION

Un but de l'invention est de proposer un moyen permettant de limiter les risques précités.

### RESUME DE L'INVENTION

A cet effet on prévoit, selon l'invention, un raccord comportant un corps tubulaire délimitant un canal ayant un tronçon de réception d'une extrémité de conduite, le tronçon de réception débouchant à l'extérieur par une ouverture d'entrée et comportant des moyens d'assujettissement étanches de l'extrémité de conduite dans le tronçon de réception, un manchon rigide s'étendant sur une portion externe du corps et en saillie de l'ouverture d'entrée, le manchon comportant des première et deuxième extrémités opposées associées respectivement à un premier et un deuxième éléments d'étanchéité externes, annulaires et élastiquement déformables, agencés pour prendre appui respectivement sur la conduite et sur le corps.

Ainsi, les éléments d'étanchéité externes empêchent une pénétration trop profonde des impuretés à l'intérieur du raccord.

De préférence, les éléments d'étanchéité externes sont agencés pour prolonger une surface externe du manchon jusqu'au corps et la conduite respectivement.

Le raccord ne présente alors sensiblement pas de zones de rétention accessibles depuis l'extérieur du raccord et le prolongement de la surface externe du manchon facilite l'écoulement des produits de nettoyage sur le raccord en limitant le risque d'une rétention de celui-ci.

Selon un mode de réalisation particulier, le manchon est agencé pour coopérer avec les moyens d'assujettissement pour constituer un organe de verrouillage de ceux-ci et, de préférence, les moyens d'assujettissement étanche comprennent une douille d'accrochage qui est montée dans le tronçon de réception mobile axialement entre une position verrouillée et une position déverrouillée, le manchon rigide coopérant avec la douille d'accrochage et étant monté mobile axialement sur le corps entre une position de verrouillage dans laquelle le manchon maintient la douille d'accrochage en position verrouillée et une position de déverrouillage dans laquelle le manchon accueille une partie de la douille d'accrochage en position déverrouillée.

Le manchon assure alors une fonction supplémentaire de verrouillage de la douille d'accrochage, augmentant ainsi la résistance de la connexion procurée par le raccord.

Avantageusement alors, le corps et la douille comprennent des surfaces de glissement réciproques formant cames pour amener la douille d'accrochage d'un état d'expansion radiale lorsque la douille d'accrochage est en position déverrouillée à un état de serrage radial lorsque la douille d'accrochage est en position verrouillée.

Ainsi, la douille d'accrochage dans son état d'expansion radiale facilite l'introduction de l'extrémité de conduite dans le raccord alors que, dans son état de serrage radial, la douille d'accrochage va fermement retenir l'extrémité de conduite. Le manchon va permettre le déplacement de la douille d'accrochage de sa position déverrouillée à sa position verrouillée tandis que les surfaces de glissement réciproques vont simultanément amener la douille d'accrochage de son état d'expansion radiale à son état de serrage radial. La connexion est ainsi assurée grâce à la manipulation du seul manchon. En outre, dans son état d'expansion radial, la douille d'accrochage délimite une section de passage de diamètre avantageusement légèrement inférieur au diamètre de l'extrémité de conduite de sorte que la douille d'accrochage, lors de son déplacement de la position déverrouillée à la position verrouillée, va également entraîner l'extrémité de conduite.

De préférence, le tronçon de réception se termine à l'opposé de l'ouverture d'entrée par un épaulement interne orienté vers l'ouverture d'entrée et accueille un élément d'étanchéité interne, annulaire et élastiquement déformable, disposé entre l'épaulement interne et la douille d'accrochage et, avantageusement, l'élément d'étanchéité interne comprend une section tubulaire agencée pour serrer un pourtour de l'extrémité de conduite et terminé par une collerette interne agencée pour être serrée entre une face terminale de l'extrémité de conduite et l'épaulement interne.

Le déplacement de l'extrémité de conduite simultanément au déplacement de la douille d'accrochage permet de venir mettre en appui la face terminale de l'extrémité de conduite contre la collerette interne de l'élément d'étanchéité interne en serrant celle-ci contre l'épaulement interne terminant le tronçon de réception. Il n'y a dès lors pas de zone de rétention de produit entre l'épaulement interne et la face terminale de l'extrémité de conduite, ce qui facilite également le nettoyage interne du raccord.

De préférence alors, l'épaulement se raccorde au tronçon de réception par une surface tronconique.

La surface tronconique permet de renforcer l'effort d'application de l'élément d'étanchéité contre l'extrémité de conduite et tend à repousser l'élément d'étanchéité interne vers la douille d'accrochage en particulier lorsque celle-ci est en position déverrouillée.

Selon une caractéristique particulière, le premier élément d'étanchéité externe comprend une bague reçue entre la douille d'accrochage et le manchon pour être serrée entre ceux-ci, la bague comportant une portion de remplissage d'un espace annulaire laissé entre la première extrémité du manchon et la conduite.

L'espace annulaire ne constitue ainsi pas une zone de rétention de matière.

Selon une autre caractéristique particulière, le deuxième élément d'étanchéité externe est reçu entre un épaulement externe du corps et la deuxième extrémité du manchon.

La zone s'étendant entre l'épaulement et la deuxième extrémité du manchon est comblée par le deuxième élément d'étanchéité externe et ne constitue donc pas une zone de rétention.

Selon une variante ne faisant pas partie de l'invention, le premier élément d'étanchéité externe est une lèvre solidaire de la première extrémité du manchon et/ou le deuxième élément d'étanchéité externe est une lèvre solidaire de la deuxième extrémité du manchon et, éventuellement, la ou les lèvres sont d'une seule pièce avec le manchon.

Le manchon et les éléments d'étanchéité externes étant solidaires, le risque d'une mise en place incorrecte des éléments d'étanchéité externes est évité.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels :
- la figure 1 est une demi-vue en coupe axiale d'un raccord conforme à un mode de réalisation de l'invention,
- les figures 2 et 3 sont des vues analogues à la figure 1, illustrant la connexion d'une extrémité de conduite au raccord, la connexion étant respectivement déverrouillée et verrouillée,
- la figure 4 est une vue analogue à la figure 3 d'un raccord selon un deuxième mode de réalisation ne faisant pas partie de l'invention.
- la figure 5 est une vue analogues à la figure 4 d'une variante du deuxième mode de réalisation, ne faisant pas partie de l'invention.

### DESCRIPTION DETAILLEE DE L'INVENTION

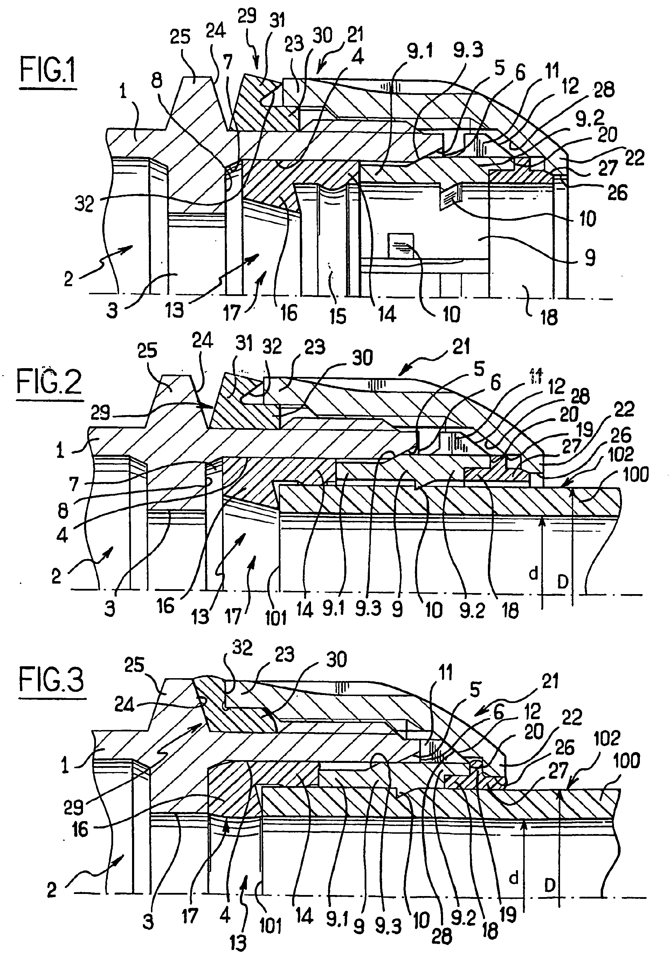

En référence aux figures 1 à 3, le raccord conforme au premier mode de réalisation de l'invention est ici destiné à unir deux extrémités de conduite 100 dont une seule est représentée ici. L'extrémité de conduite 100 présente un diamètre interne d et un diamètre externe D et possède une face terminale 101 et une surface externe 102.

Le raccord possède donc ici deux extrémités symétriques dont une seule sera décrite ici.

Le raccord comprend un corps 1 délimitant un canal interne généralement désigné en 2, possédant un tronçon central 3 de diamètre égal au diamètre d et deux tronçons de réception 4 d'une des extrémités de conduite 100.

Chaque tronçon de réception 4 se raccorde d'un côté par un chanfrein 5 à une ouverture d'entrée 6 ouverte sur l'extérieur du corps 1. D'un côté opposé à l'ouverture d'entrée 6, le tronçon de réception 4 se raccorde au tronçon central 3 par une surface tronconique 7 suivie d'un épaulement interne 8 radial et orienté vers l'ouverture d'entrée 6.

Dans le tronçon de réception 4 est montée une douille d'accrochage 9 pourvue intérieurement de dents 10 agencées pour mordre la surface externe 102 de la conduite 100. La douille d'accrochage 9 est déformable élastiquement entre un état d'expansion radiale dans lequel les dents 10 définissent un diamètre de passage légèrement inférieur au diamètre D et un état de serrage radial dans lequel la surface interne de la douille 9 définit un diamètre de passage égal légèrement inférieur au diamètre D (permettant une pénétration complète des dents dans l'extrémité de conduite 100 et un serrage de cette dernière). La douille 9 est mobile axialement dans le tronçon de réception 4 entre une position déverrouillée dans laquelle seule une portion d'extrémité 9.1 de la douille d'accrochage 9 est reçue dans le tronçon de réception 4 et une position déverrouillée dans laquelle, outre la portion d'extrémité 9.1, une partie d'une portion d'extrémité 9.2 de la douille d'accrochage 9 est également reçue dans le tronçon de réception 4. La surface externe de la portion d'extrémité 9.1 se raccorde à la surface externe de la portion d'extrémité 9.2 par une surface tronconique 9.3 agencée pour coopérer par glissement avec le chanfrein 5 à la manière d'une came pour amener la douille d'accrochage 9 de son état d'expansion radiale vers son état de serrage radial lorsque la douille d'accrochage 9 est déplacée de sa position déverrouillée vers sa position verrouillée. La portion d'extrémité 9.2 de la douille 9 est pourvue extérieurement de nervures 11 s'étendant sur une partie seulement de la longueur de la portion d'extrémité 9.2 du côté de celle-ci opposé à la surface tronconique 9.3. Les nervures 11 ont une face frontale 12 biseautée.

Un élément d'étanchéité interne généralement désigné en 13, tubulaire et élastiquement déformable, est disposé dans le tronçon de réception 4, entre l'épaulement interne 8 et la douille d'accrochage 9. L'élément d'étanchéité interne 13 comprend une partie tubulaire 14 ayant au repos :
- un diamètre extérieur sensiblement égal ou légèrement inférieur au diamètre du tronçon de réception 4,
- un diamètre intérieur sensiblement égal au diamètre *D*,
- une longueur avantageusement supérieure à la distance séparant l'épaulement interne 8 et la douille d'accrochage 9 en position verrouillée.

La partie tubulaire 14 est pourvue, du côté de la douille d'accrochage 9, d'un bourrelet interne 15 ayant un diamètre inférieur au diamètre *D* et, du côté de l'épaulement 8, d'une collerette interne 16 délimitée intérieurement par une surface tronconique 17 ayant une grande base tournée vers la douille d'accrochage 9 et de diamètre égal au diamètre *d* et une petite base tournée vers l'épaulement interne 8 et de diamètre supérieur au diamètre d. La collerette 16 a en outre une épaisseur plus importante au niveau de son pourtour intérieur.

La face terminale de la portion d'extrémité 9.2 de la douille 9 est équipée d'un premier élément d'étanchéité externe constitué d'une bague 18 de diamètre interne au repos sensiblement supérieur au diamètre D et qui s'étend en saillie de la portion d'extrémité 9.2. La bague 18 comprend une collerette externe 19 s'étendant contre une face terminale 20 de la portion d'extrémité 9.2 de la douille d'accrochage 9.

Un manchon rigide généralement désigné en 21 est monté sur chaque extrémité du corps 1.

Chaque manchon rigide 21 possède une première extrémité 22 qui s'étend en saillie au-delà du corps 1 en entourant la portion d'extrémité 9.2 de la douille d'accrochage 9 et la bague 18 et une deuxième extrémité 23 qui s'étend en regard d'un épaulement externe 24 formé par une face latérale d'une collerette externe 25 du corps 1.

La première extrémité 22 délimite une ouverture d'entrée 26 coaxiale à l'ouverture d'entrée 6 du corps 1 et de diamètre supérieur au diamètre *D* mais légèrement inférieur au diamètre externe de la portion 27 de la bague 18 s'étendant au-delà de la collerette externe 19.

Le manchon rigide 21 est ici relié au corps 1 par une liaison vis-écrou et est ainsi susceptible d'être déplacé axialement entre une position déverrouillée (représentée aux figures 1 et 2) dans laquelle il ménage un espace suffisant pour accueillir la portion d'extrémité 9.2 de la douille d'accrochage 9 en position déverrouillée et une position de verrouillage dans laquelle le manchon rigide 21 maintient la douille d'accrochage 9 en position verrouillée. Le manchon rigide 21 prend appui par l'intermédiaire d'une surface interne tronconique 28 sur la face frontale 12 des nervures 11 de telle manière que le déplacement du manchon rigide 21 de sa position de déverrouillage vers sa position de verrouillage produise un déplacement de la douille d'accrochage 9 de sa position déverrouillée vers sa position verrouillée. On notera que l'inclinaison de la surface interne tronconique 28 et de la face frontale 12 des nervures 11 permet par glissement relatif un effet de came favorisant la déformation élastique de la douille d'accrochage 9 de son état d'expansion radiale vers son état de serrage radial. Des nervures 11 ont été préférées à une collerette continue afin de ne pas rigidifier radialement la douille à cet endroit.

Un deuxième élément d'étanchéité externe 29, tubulaire et élastiquement déformable, est disposé entre l'épaulement externe 24 et la deuxième extrémité 23 du manchon rigide 21. Le deuxième élément d'étanchéité externe 29 comprend une partie tubulaire 30 ayant un diamètre intérieur sensiblement égal au diamètre extérieur de l'extrémité du corps 1 et un diamètre extérieur sensiblement égal au diamètre interne de la deuxième extrémité 23 du manchon rigide 21. La partie tubulaire 30 est en partie engagée entre la deuxième extrémité 23 et le corps 1 et, à l'opposé, la partie tubulaire 30 est pourvue, du côté de l'épaulement externe 24, d'une collerette externe 31 dont la surface externe a un diamètre sensiblement égal au diamètre externe de la collerette externe 25 et qui présente en regard de la deuxième extrémité 23 du manchon rigide 21 une surface latérale 32 de forme tronconique dont la grande base est orientée vers le manchon rigide 21.

Une manoeuvre de connexion va maintenant être décrite.

Avant toute connexion, le raccord se trouve tel que représenté à la figure 1, c'est-à-dire que le manchon rigide 21 est dans sa position de déverrouillage, la douille d'accrochage 9 est dans sa position déverrouillée, et l'élément d'étanchéité interne 13 est appliqué contre la portion d'extrémité 9.1 de la douille d'accrochage 9, la surface tronconique 7 s'opposant au maintien de la collerette interne 16 contre l'épaulement interne 8 en tendant à déplacer l'élément d'étanchéité interne 13 vers le tronçon de réception 4.

L'extrémité de conduite 100 est alors introduite à force par un opérateur dans le raccord, la douille d'accrochage 9 et l'élément d'étanchéité interne 13 jusqu'à venir en butée de la collerette interne 16 de l'élément d'étanchéité interne 13 (voir figure 2). Les dents 10 ont alors pénétré légèrement dans la surface externe 102 de l'extrémité de conduite 100.

Le manchon rigide 21 est alors vissé par l'opérateur jusqu'à sa position de verrouillage. Lors de son déplacement, le manchon rigide 21 entraîne la douille d'accrochage 9 jusqu'à sa position verrouillée. La douille d'accrochage 9 est ainsi amenée par le chanfrein 5 de son état d'expansion radiale à son état de serrage radial dans lequel elle est maintenue par la paroi du tronçon de réception 4. La douille d'accrochage 9 entraîne avec elle l'élément d'étanchéité interne 13 et l'extrémité de conduite 100 dont la face terminale 101 vient comprimer la collerette interne 16 de l'élément d'étanchéité interne 13 contre l'épaulement interne 8. Du fait de cette compression et de la surface tronconique 7, la surface tronconique 17 de la collerette interne 16 devient sensiblement cylindrique avec un diamètre voisin du diamètre d. L'épaisseur plus importante de la collerette 16 au niveau de son pourtour intérieur garantit un contact étroit de la collerette 16 et de la face terminale 101 dans cette zone. Le serrage radial exercé par la douille d'accrochage 9 sur l'extrémité de conduite empêche une déformation de l'extrémité de conduite, telle qu'une ovalisation, et/ou un mouvement de la conduite qui pourraient altérer l'étanchéité du raccordement.

Lorsque le manchon rigide 21 est en position de verrouillage, la portion 27 de la bague 18 à été introduite à force dans l'espace annulaire délimité entre le pourtour de l'ouverture d'entrée 26 de la première extrémité 22 du manchon rigide 21 et la surface externe 102 de l'extrémité de conduite 100 et est comprimée entre celles-ci, comblant cet espace en totalité. En outre, la collerette externe 19 de la bague 18 est serrée entre la face terminale de la portion d'extrémité 9.2 de la douille d'accrochage 9 et une face radiale correspondante de la première extrémité 22 du manchon rigide 21. La collerette externe 31 du deuxième élément d'étanchéité externe 29 est quant à elle comprimée entre la deuxième extrémité 23 du manchon rigide 21 et l'épaulement externe 24 du corps 1. Le fait que la collerette externe 31 du deuxième élément d'étanchéité externe 29 soit plus épaisse à sa périphérie qu'à sa base permet de s'assurer qu'un contact suffisant du deuxième élément d'étanchéité externe 29 contre le manchon rigide 21 est assuré en périphérie, limitant par là le risque de création d'une zone de rétention à cet endroit.

La deuxième extrémité 23 du manchon rigide 21 comporte en outre des reliefs ou une rugosité qui, par coopération avec le deuxième élément d'étanchéité externe, s'oppose au dévissage du manchon rigide.

On constate que les éléments d'étanchéité externes 18 (et plus précisément la portion 27) et 29 (et plus précisément la surface externe de la collerette 31) viennent prolonger la surface externe du manchon rigide 21 jusqu'à la surface externe 102 de la conduite 100 et la surface externe de la collerette externe du corps 1.

Les éléments identiques ou analogues à ceux précédemment décrits porteront une référence numérique identique dans la description qui suit d'un deuxième mode de réalisation.

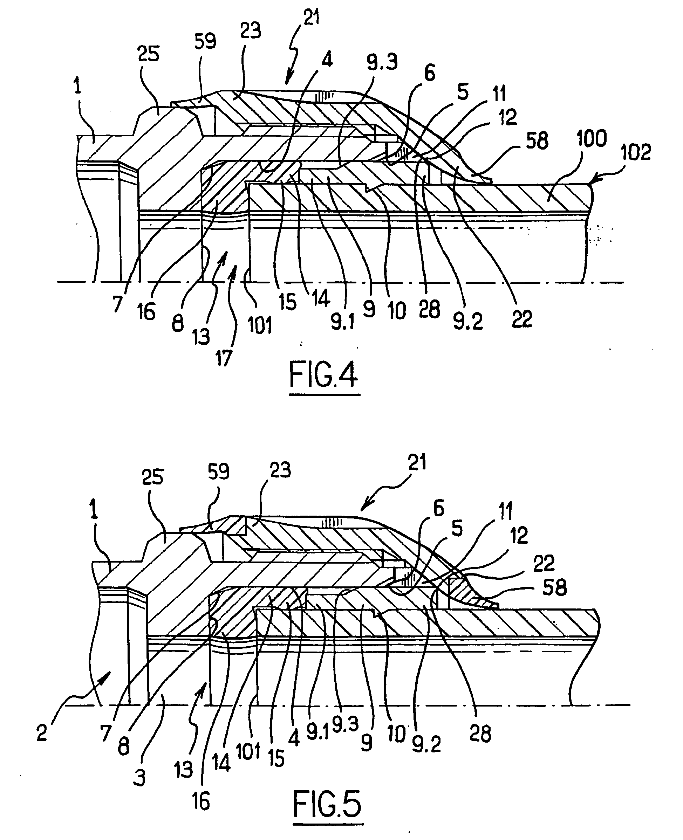

Dans ce mode de réalisation, les éléments d'étanchéité externes sont remplacés par des lèvres 58, 59, annulaires et élastiquement déformables, solidaires respectivement de la première extrémité 22 et de la deuxième extrémité 23 du manchon rigide 21. Ces lèvres peuvent être en une seule pièce avec le manchon rigide 21 comme sur la figure 4 ou fixées sur celui-ci par soudage ou collage comme sur la figure 5.

On constate là encore que les éléments d'étanchéité externes formés par les lèvres 58 et 59 viennent prolonger la surface externe du manchon rigide 21 jusqu'à la surface externe 102 de la conduite 100 et la surface externe de la collerette externe du corps 1. En outre, la souplesse et la forme de lèvre permettent aux éléments d'étanchéité externes de former chacun un congé de raccordement de la surface externe du manchon rigide 21 avec la surface externe 102 et la surface externe du corps 1. Cette forme facilite l'évacuation des liquides utilisés pour le nettoyage extérieur du raccord.

Le mode de fonctionnement est identique à celui du premier mode de réalisation.

Bien entendu, l'invention n'est pas limitée aux modes de réalisation décrits et on peut y apporter des variantes de réalisation sans sortir du cadre de l'invention tel que défini par les revendications.

En particulier, le raccord peut avoir d'autres formes que celles illustrées.

Les deux extrémités du raccord peuvent ne pas être symétriques.

Bien que sur les figures 4 et 5, les lèvres prennent appui sur la surface externe d'une collerette du corps, le corps peut être dépourvu de collerette externe, les lèvres prenant appui directement sur la surface externe de celui-ci.

Les moyens d'assujettissement étanche de l'extrémité de conduite peuvent avoir une structure différente de celle décrite et comprendre par exemple une rondelle à dent ou une pince.

Bien que le manchon rigide associé aux éléments d'étanchéité externes ait été représenté avec une surface externe de forme générale en ogive tronquée, d'autres formes sont possibles, comme une forme tronconique.

Des inversions cinématiques et des combinaisons des modes de réalisation décrits sont possibles.

Le manchon rigide peut coopérer avec les moyens d'assujettissement étanche pour les verrouiller et ainsi s'opposer à une déconnexion (voir par exemple les modes de réalisation décrits) ou n'exercer qu'une fonction de protection du raccord (étanchéification) éventuellement mécanique (rigidification, protection contre les chocs) ou les deux.

L'effet de serrage exercé sur l'extrémité de conduite par la douille d'accrochage est indépendant des éléments d'étanchéité externe.

Les reliefs ou rugosités assurant une fonction anti-dévissage du manchon rigide 21 peuvent être ménagés sur l'une ou l'autre des extrémités du manchon et/ou sur l'un ou l'autre des éléments d'étanchéité externes. Ces reliefs ou rugosités peuvent également être omis.

## Revendications

1. Raccord comportant un corps tubulaire (1) délimitant un canal (2) ayant un tronçon de réception (4) d'une extrémité de conduite (100), le tronçon de réception débouchant à l'extérieur par une ouverture d'entrée (6) et comportant des moyens d'assujettissement étanches (13, 9) de l'extrémité de conduite dans le tronçon de réception, un manchon rigide (21) s'étendant sur une portion externe du corps et en saillie de l'ouverture d'entrée, le manchon comportant des première et deuxième extrémités opposées (22, 23) associées respectivement à un premier et un deuxième éléments d'étanchéité externes (18, 29 ; 58, 59), annulaires et élastiquement déformables, agencés pour prendre appui respectivement sur la conduite et sur le corps, les moyens d'assujettissement étanche comprenant une douille d'accrochage (9) qui est montée dans le tronçon de réception (4) mobile axialement entre une position verrouillée et une position déverrouillée, le manchon (21) coopérant avec la douille d'accrochage et étant monté mobile axialement sur le corps entre une position de verrouillage dans laquelle le manchon maintient la douille d'accrochage en position verrouillée et une position de déverrouillage dans laquelle le manchon accueille une partie de la douille d'accrochage en position déverrouillée, **caractérisé en ce que** le premier élément d'étanchéité externe comprend une bague (18) reçue entre la douille (9) et le manchon (21) pour être serrée entre ceux-ci, la bague comportant une portion de remplissage (27) d'un espace annulaire laissé entre la première extrémité du manchon (22) et la conduite (100).

2. Raccord selon la revendication 1, dans lequel les éléments d'étanchéité externes (18, 29 ; 58, 59) sont agencés pour prolonger une surface externe du manchon (21) jusqu'au corps (1) et la conduite (100) respectivement.

3. Raccord selon la revendication 1, dans lequel le corps (1) et la douille d'accrochage (9) comprennent des surfaces de glissement (5, 9.3) réciproques formant cames pour amener la douille d'accrochage d'un état d'expansion radiale lorsque la douille d'accrochage est en position déverrouillée à un état de serrage radial lorsque la douille est en position verrouillée.

4. Raccord selon la revendication 1, dans lequel le tronçon de réception (4) se termine à l'opposé de l'ouverture d'entrée (6) par un épaulement interne (8) orienté vers l'ouverture d'entrée et accueille un élément d'étanchéité interne (13), annulaire et élastiquement déformable, disposé entre l'épaulement interne et la douille d'accrochage (9).

5. Raccord selon la revendication 4, dans lequel l'élément d'étanchéité interne (13) comprend une section tubulaire (14) agencée pour serrer un pourtour de l'extrémité de conduite et terminé par une collerette interne (16) agencée pour être serrée entre une face terminale (101) de l'extrémité de conduite (100) et l'épaulement interne (8).

6. Raccord selon la revendication 5, dans lequel l'épaulement interne (8) se raccorde au tronçon de réception (4) par une surface tronconique (7).

7. Raccord selon la revendication 1, dans lequel le deuxième élément d'étanchéité externe (29) est reçu entre un épaulement externe (24) du corps (1) et la deuxième extrémité (23) du manchon (21).

## Claims

1. A coupling comprising a tubular body (1) defining a channel (2) having a reception segment (4) receiving a pipe end (100), the reception segment opening to the outside via an inlet opening (6) and including leaktight holder means (13, 9) for holding the pipe end in the reception segment, a rigid sleeve (21) extending over an outer portion of the body and projecting from the inlet opening, the sleeve including first and second opposite ends (22, 23) respectively associated with first and second outer sealing elements (18, 29; 58, 59) that are annular and elastically deformable, and that are arranged to bear respectively on the pipe and on the body, the leaktight holder means comprising a catch bushing (9) that is mounted to move axially in the reception segment (4) between a locked position and an unlocked position, the sleeve (21) co-operating with the catch bushing and being mounted to move axially on the body between a locking position in which the sleeve holds the catch bushing in the locked position, and an unlocking position in which the sleeve receives a portion of the catch bushing in the unlocked position, the coupling being **characterized in that** the first outer sealing element comprises a ring (18) received between the bushing (9) and the sleeve (21) to be clamped therebetween, the ring including a filler portion (27) for filling an annular space left between the first end of the sleeve (22) and the pipe (100).

2. A coupling according to claim 1, wherein the outer sealing elements (18, 29; 58, 59) are arranged to extend an outside surface of the sleeve (21) as far as the body (1) and as far as the pipe (100), respectively.

3. A coupling according to claim 1, wherein the body (1) and the catch bushing (9) include complementary sliding surfaces (5, 9.3) forming cams to bring the catch bushing from a radially-expanded state when the catch bushing is in the unlocked position to a radial clamping position when the bushing is in the locked position.

4. A coupling according to claim 1, wherein the reception segment (4) terminates remote from the inlet opening (6) by an internal shoulder (8) facing towards the inlet opening and receives an internal sealing element (13) that is annular and elastically deformable, and that is arranged between the internal shoulder and the catch bushing (9).

5. A coupling according to claim 4, wherein the internal sealing element (13) comprises a tubular section (14) that is arranged to clamp around the periphery of the pipe end and that is terminated by an internal collar (16) arranged to be clamped between a terminal face (101) of the pipe end (100) and the internal shoulder (8).

6. A coupling according to claim 5, wherein the internal shoulder (8) is connected to the reception segment (4) by a frustoconical surface (7).

7. A coupling according to claim 1, wherein the second outer sealing element (29) is received between an outer shoulder (24) of the body (1) and the second end (23) of the sleeve (21).

## Patentansprüche

1. Verbindungsstück, umfassend ein rohrförmiges Gehäuse (1), das einen Kanal (2) begrenzt, der einen Aufnahmeabschnitt (4) zur Aufnahme eines Leitungsendes (100) hat, wobei der Aufnahmeabschnitt über eine Eintrittsöffnung (6) nach außen mündet und dichte Befestigungsmittel (13, 9) zum Befestigen des Leitungsendes in dem Aufnahmeabschnitt umfasst, eine starre Hülse (21), die sich auf einem äußeren Abschnitt des Gehäuses erstreckt und über die Eintrittsöffnung vorsteht, wobei die Hülse ein erstes und ein zweites Ende (22, 23) umfasst, die einander entgegengesetzt und mit einem ersten bzw. einem zweiten äußeren Dichtungselement (18, 29; 58, 59) verbunden sind, die ringförmig und elastisch verformbar sowie derart ausgebildet sind, dass sie auf der Leitung bzw. auf dem Gehäuse zur Anlage kommen, wobei die dichten Befestigungsmittel eine Verankerungsmuffe (9) umfassen, die in dem Aufnahmeabschnitt (4) zwischen einer verriegelten Position und einer entriegelten Position axial verschiebbar ist, wobei die Hülse (21) mit dem Verankerungszapfen zusammenwirkt und auf dem Gehäuse zwischen einer Verriegelungsposition, in der die Hülse die Verankerungsmuffe in verriegelter Position hält, und einer Entriegelungsposition, in der die Hülse einen Teil der Verankerungsmuffe in entriegelter Position aufnimmt, axial verschiebbar ist, **dadurch gekennzeichnet, dass** das erste äußere Dichtungselement einen Ring (18) umfasst, der zwischen der Verankerungsmuffe (9) und der Hülse (21) aufgenommen ist, um zwischen denselben eingespannt zu sein, wobei der Ring einen Füllabschnitt (27) zum Ausfüllen eines ringförmigen Raums umfasst, der zwischen dem ersten Ende der Hülse (22) und der Leitung (100) ausgespart ist.

2. Verbindungsstück nach Anspruch 1, wobei die äußeren Dichtungselemente (18, 29; 58, 59) derart ausgebildet sind, dass sie eine Außenfläche der Hülse (21) bis zum Gehäuse (1) bzw. zur Leitung (100) verlängern.

3. Verbindungsstück nach Anspruch 1, wobei das Gehäuse (1) und die Verankerungsmuffe (9) komplementäre Gleitflächen (5, 9.3) umfassen, die Nocken bilden, die dazu bestimmt sind, die Verankerungsmuffe von einem radial ausgedehnten Zustand, wenn die Verankerungsmuffe in der entriegelten Position ist, in einen radial eingespannten Zustand zu bringen, wenn die Muffe in der verriegelten Position ist.

4. Verbindungsstück nach Anspruch 1, wobei der Aufnahmeabschnitt (4) entgegengesetzt zur Eintrittsöffnung (6) mit einer inneren Schulter (8) abschließt, die zur Eintrittsöffnung gerichtet ist und ein inneres Dichtungselement (13) aufnimmt, das ringförmig und elastisch verformbar sowie zwischen der inneren Schulter und der Verankerungsmuffe (9) angeordnet ist.

5. Verbindungsstück nach Anspruch 4, wobei das innere Dichtungselement (13) einen rohrförmigen Abschnitt (14) umfasst, der so ausgebildet ist, dass er einen Umfang des Leitungsendes festspannt, und mit einem inneren Kragen (16) abschließt, der so ausgebildet ist, dass er zwischen einer Endfläche (101) des Leitungsendes (100) und der inneren Schulter (8) festgespannt ist.

6. Verbindungsstück nach Anspruch 5, wobei sich die innere Schulter (8) über eine kegelstumpfförmige Oberfläche (7) an den Aufnahmeabschnitt (4) anschließt.

7. Verbindungsstück nach Anspruch 1, wobei das zweite äußere Dichtungselement (29) zwischen einer äußeren Schulter (24) des Gehäuses (1) und dem zweiten Ende (23) der Hülse (21) aufgenommen ist.
